# EUROPÄISCHE PATENTSCHRIFT

(11) **EP 3 894 310 B1**
(45) Veröffentlichungstag und Bekanntmachung des Hinweises auf die Patenterteilung: **15.05.2024**
(21) Anmeldenummer: 19798589.8
(22) Anmeldetag: 04.11.2019
(51) Int. Cl.: B62J 1/10, B62J 1/12

(54) **VERSTELLBARE SITZBAUGRUPPE FÜR EIN KRAFTRAD SOWIE KRAFTRAD**
ADJUSTABLE SEAT ASSEMBLY FOR A MOTORCYCLE, AND MOTORCYCLE
ENSEMBLE SIÈGE RÉGLABLE POUR MOTOCYCLETTE AINSI QUE MOTOCYCLETTE

(30) Priorität: 14.12.2018 DE 102018132229
(43) Veröffentlichungstag der Anmeldung: 20.10.2021
(73) Patentinhaber: Bayerische Motoren Werke Aktiengesellschaft, 80809 München (DE)
(72) Erfinder: SEILER, Joerg, 80939 München (DE); NIKOLIC, Miroslav, 80992 München (DE); DIEHL, Helmut, 82431 Kochel (DE); BEUTING, Guido, 80689 Muenchen (DE); SCHELL, Raimund, 85764 Oberschleissheim (DE)
(86) Internationale Anmeldenummer: PCT/EP2019/080023
(87) Internationale Veröffentlichungsnummer: WO 2020/120026

(56) Entgegenhaltungen:
- JP-A- H02 296 584
- JP-A- S62 244 768
- JP-A- 2005 125 860
- US-A- 4 673 212
- US-A1- 2016 325 799

## Beschreibung

Die Erfindung betrifft eine verstellbare Sitzbaugruppe für ein Kraftrad sowie ein Kraftrad.

Die Sitzbank bildet an Krafträdern einen der direkten Anbindungspunkte zwischen Mensch und Maschine und spielt daher eine wichtige Rolle bezüglich des Komforts.

So sind je nach Art des Kraftrads und je nach Fahrstil verschiedene Formen der Sitzbank besser geeignet. Für dynamische Fahrstile sind zum Beispiel schmalere Sitzbänke vorteilhaft, die jedoch wiederum bei einer längeren kurvenarmen Fahrt unbequem werden können.

Eine aus dem Stand der Technik bekannte Lösung dieses Problems besteht darin, mehrere Sitzbänke mit voneinander verschiedenen Breiten bereitzustellen und je nach der Art der geplanten Fahrt die jeweils passende Sitzbank am Kraftrad zu montieren.

Die zusätzliche Sitzbank bzw. die zusätzlichen Sitzbänke sind jedoch für den Kunden mit zusätzlichen Kosten verbunden und ihr Wechsel ist relativ zeitaufwendig. Außerdem kann die Sitzbank nicht einfach unterwegs ausgetauscht werden, da zu diesem Zweck eine komplette Ersatzsitzbank mitgeführt werden müsste.

Die US 4 673 212 A1 und die US 2016 0 325 799 A1 offenbaren jeweils eine Sitzbaugruppe gemäß dem Oberbegriff des Anspruchs 1.

Die JP S62 244768 A offenbart eine Sitzbaugruppe mit einer verstellbaren Seitenstütze.

Die JP H02 296584 A offenbart eine Sitzbaugruppe, bei der die seitliche Höhe des Sitzpolsters verstellt werden kann.

Die JP 2005 125860 A offenbart eine Sitzbaugruppe mit einer verstellbaren Rückenlehne.

Aufgabe der Erfindung ist es daher, ein Kraftrad mit einer Sitzbaugruppe bereitzustellen, bei dem die Nachteile aus dem Stand der Technik behoben sind.

Die Aufgabe wird erfindungsgemäß gelöst durch eine verstellbare Sitzbaugruppe für ein Kraftrad gemäß Anspruch 1.

Unter der Längsrichtung der Sitzbaugruppe ist dabei diejenige Richtung zu verstehen, die nach der Montage der Sitzbaugruppe am Kraftrad der Längsrichtung des Kraftrads entspricht.

Eine Breite der Sitzbaugruppe kann in einfacher Art und Weise dadurch angepasst werden, dass mittels der Verstelleinrichtung die beiden Schwenkabschnitte voneinander weg verschwenkt werden. Anders ausgedrückt ist die erfindungsgemäße Sitzbaugruppe aufgrund der Verschwenkbarkeit der beiden Schwenkabschnitte in ihrer Breite verstellbar. Damit entfällt die Notwendigkeit zusätzlicher Sitzbänke zur Breitenverstellung der Sitzbaugruppe, wodurch Kosten eingespart werden. Zudem kann die Breite der Sitzbaugruppe auch unterwegs angepasst werden.

Ein Aspekt der Erfindung sieht vor, dass die Verstelleinrichtung eine Feststelleinrichtung umfasst, die dazu ausgebildet ist, eine Schwenkbewegung der beiden Schwenkabschnitte freizugeben und/oder zu sperren, insbesondere wobei die Feststelleinrichtung einen minimalen und/oder einen maximalen Winkel der Schwenkbewegung festlegt. Dabei weist die Sitzbaugruppe beim minimalen Winkel der Schwenkbewegung eine minimale Breite und beim maximalen Winkel der Schwenkbewegung eine maximale Breite auf. Durch die Feststelleinrichtung ist ein ungewolltes Verstellen der Sitzbaugruppe, insbesondere während einer Fahrt mit dem Kraftrad, zuverlässig verhindert.

Gemäß einer Ausgestaltung der Erfindung weist der Basisabschnitt wenigstens zwei Aufnahmen und die Schwenkabschnitte jeweils wenigstens eine Durchgangsöffnung auf, wobei sich Befestigungsmittel der Feststelleinrichtung durch die wenigstens eine Durchgangsöffnung jedes Schwenkabschnitts hindurch in jeweils eine der Aufnahmen erstrecken. Durch die Befestigungsmittel ist vorzugsweise jeweils eine kraft- und/oder formschlüssige Verbindung zwischen den Schwenkabschnitten und dem Basisabschnitt geschaffen. Bei den Befestigungsmitteln handelt es sich beispielsweise um Schrauben, Bolzen oder andere geeignete Befestigungsmittel.

Vorzugsweise sind die Befestigungsmittel als Schrauben ausgebildet. Weiter bevorzugt weisen die Aufnahmen ein zum Gewinde der Schrauben passendes Innengewinde auf, sodass die Schwenkabschnitte durch die Durchgangsöffnungen hindurch am Basisabschnitt festgeschraubt werden können.

Es können mehrere Durchgangsöffnungen in jedem der Schwenkabschnitte vorgesehen sein, wobei die mehreren Durchgangsöffnungen dann in Längsrichtung der Sitzbaugruppe gesehen seitlich zueinander versetzt sind, genauer gesagt entlang eines Kreisabschnitts um die jeweilige Schwenkachse des entsprechenden Schwenkabschnitts. Dadurch sind die Schwenkabschnitte stufenweise in mehreren Stellungen, die voneinander verschiedene Schwenkwinkel gegenüber dem Basisabschnitt aufweisen, mittels der Befestigungsmittel mit dem Basisabschnitt verbindbar, insbesondere wie oben erläutert kraft- und/oder formschlüssig. Dementsprechend ist die Breite der Sitzbaugruppe in mehreren Stufen verstellbar.

Vorzugsweise sind die Durchgangsöffnungen jeweils als Langloch ausgebildet, wobei sich die Langlöcher in den Schwenkabschnitten jeweils im Wesentlichen entlang eines Kreisabschnitts um ein Zentrum der Schwenkbewegung erstrecken. Die Befestigungsmittel erstrecken sich dabei durch die Langlöcher hindurch in die jeweilige Aufnahme im Basisabschnitt. Vorzugsweise weisen die Befestigungsmittel eine erste und eine zweite Stellung auf, wobei der jeweilige Schwenkabschnitt in der ersten Stellung bezüglich der Schwenkbewegung kraftschlüssig mit dem Basisabschnitt verbunden ist, und wobei der jeweilige Schwenkabschnitt in der zweiten Stellung der Befestigungsmittel gegenüber dem Basisabschnitt verschwenkbar ist. Dementsprechend ist die Breite der Sitzbaugruppe in dieser Ausgestaltung der Erfindung stufenlos verstellbar.

Weiter bevorzugt erstrecken sich die Befestigungsmittel auch in ihrer zweiten Stellung durch das jeweilige Langloch hindurch, wobei die Langlöcher jeweils eine Kulisse für die Schwenkbewegung der Schwenkabschnitte bilden.

Insbesondere sind die Befestigungsmittel als Schrauben ausgebildet. Sind die Schrauben angezogen, so sind die Schwenkabschnitte bezüglich der Schwenkbewegung kraftschlüssig mit dem Basisabschnitt verbunden und nicht verschwenkbar. Sind die Schrauben hingegen gelockert, so sind die Schwenkabschnitte gegenüber dem Basisabschnitt verschwenkbar.

Ein weiterer Aspekt der Erfindung sieht vor, dass die Verstelleinrichtung elektrisch und/oder mechanisch betätigbar ist. Dementsprechend umfasst die Verstelleinrichtung einen Elektromotor und/oder einen mechanischen Mechanismus, mittels dem die beiden Schwenkabschnitte verschwenkbar sind. Die Breitenverstellung kann zumindest teilweise automatisch und/oder manuell erfolgen.

Vorzugsweise ist die Verstelleinrichtung dabei betätigbar, ohne dass Teile wie zum Beispiel Sitzpolster von der Sitzbaugruppe abgenommen werden müssen. Zu diesem Zweck kann die Verstelleinrichtung ein von außerhalb des Kraftrads zugängliches Betätigungselement aufweisen, wie zum Beispiel ein Stellrad zur Betätigung des mechanischen Mechanismus und/oder einen Betätigungsschalter für den Elektromotor.

Insbesondere weisen die Schwenkabschnitte jeweils einen seitlichen Wandabschnitt auf, der sich, in Längsrichtung der Sitzbaugruppe gesehen, von einer Oberseite des Basisabschnitts ausgehend seitlich am Basisabschnitt vorbei erstreckt, insbesondere wobei eine Kontur der Wandabschnitte zu einer Kontur des Basisabschnitts zumindest abschnittsweise ähnlich ist.

Unter "ähnlich" ist dabei eine Ähnlichkeit im mathematischen Sinne zu verstehen. Insbesondere ist die Kontur der Wandabschnitte abschnittsweise im Wesentlichen gleich der Kontur des Basisabschnitts, sodass die Wandabschnitte in ihrer unverschwenkten Stellung abschnittsweise außenseitig am Basisabschnitt anliegen, insbesondere entlang der gesamten Kontur der Wandabschnitte. Die Wandabschnitte bilden dann einen Anschlag, der die minimale Auslenkung der Schwenkabschnitte bezüglich der Schwenkbewegung festlegt.

Die Sitzbaugruppe kann ein Sitzpolster aufweisen, das sich im Wesentlichen über den gesamten Basisabschnitt erstreckt und mit den Schwenkabschnitten und/oder dem Basisabschnitt verbunden ist. Anders ausgedrückt ist den Schwenkabschnitten und dem Basisabschnitt ein gemeinsames Sitzpolster zugeordnet.

Ein Material, aus dem das Sitzpolster besteht, kann dehnbar sein, um die Schwenkbewegung der Schwenkabschnitt zu kompensieren.

Vorzugsweise weist das Sitzpolster im Bereich der beiden Schwenkabschnitte einen Längsschlitz auf, der sich vorzugsweise im Wesentlichen über die gesamte Länge der Schwenkabschnitte erstreckt. Dadurch können die Schwenkabschnitte verschwenkt werden, ohne dass sich das Material des Sitzpolsters wesentlich dehnen muss.

Weiter bevorzugt weist das Sitzpolster einen Sitzpolsterbezug auf, der sich über das gesamte Sitzpolster erstreckt, insbesondere also auch über den Längsschlitz hinweg. Dadurch ist zuverlässig verhindert, dass Regenwasser und/oder Schmutz in den Längsschlitz eindringt.

Insbesondere sind bzw. ist das Sitzpolster und/oder der Basisabschnitt abnehmbar. Dies ist besonders dann von Vorteil, wenn die Verstelleinrichtung unterhalb des Sitzpolsters bzw. unterhalb des Basisabschnitts vorgesehen ist.

Die Aufgabe wird außerdem erfindungsgemäß gelöst durch ein Kraftrad mit einer Sitzbaugruppe nach einem der vorhergehenden Ansprüche, wobei der Basisabschnitt fest mit dem Kraftrad verbunden ist. Bezüglich der Vorteile wird auf die obigen Erläuterungen verwiesen.

Der Basisabschnitt kann gegenüber dem Kraftrad unbeweglich am Kraftrad angebracht sein. Alternativ kann der Basisabschnitt jedoch gegenüber dem Kraftrad höhen- und/oder neigungsverstellbar sein. Die Höhen- und/oder Neigungsverstellung des Basisabschnitts kann dabei mit einem beliebigen geeigneten, aus dem Stand der Technik bekannten Mechanismus erfolgen.

Vorzugsweise ist die Verbindung zwischen dem Basisabschnitt und dem Kraftrad zerstörungsfrei lösbar. Der Basisabschnitt kann dann also ohne den Basisabschnitt oder das Kraftrad zu beschädigen vom Kraftrad abgenommen werden.

Weitere Vorteile und Eigenschaften der Erfindung ergeben sich aus der nachfolgenden Beschreibung sowie den beigefügten Zeichnungen, auf die Bezug genommen wird. In diesen zeigen:
- Figur 1 in einer Seitenansicht ein erfindungsgemäßes Kraftrad;
- Figur 2 in einer schematischen Schrägansicht eine erfindungsgemäße Sitzbaugruppe in einer ersten Stellung;
- Figur 3 in einer schematischen Draufsicht die Sitzbaugruppe von Figur 2 in einer ersten Stellung;
- Figur 4 in einer schematischen Schrägansicht die Sitzbaugruppe von Figur 2 in einer zweiten Stellung;
- die Figuren 5a und 5b in einer schematischen Ansicht von unten die Sitzbaugruppe von Figur 2 in der ersten Stellung bzw. in der zweiten Stellung; und
- die Figuren 6a und 6b in einer schematischen Ansicht von unten zwei Schwenkabschnitte der Sitzbaugruppe von Figur 2 in der ersten Stellung bzw. in der zweiten Stellung.

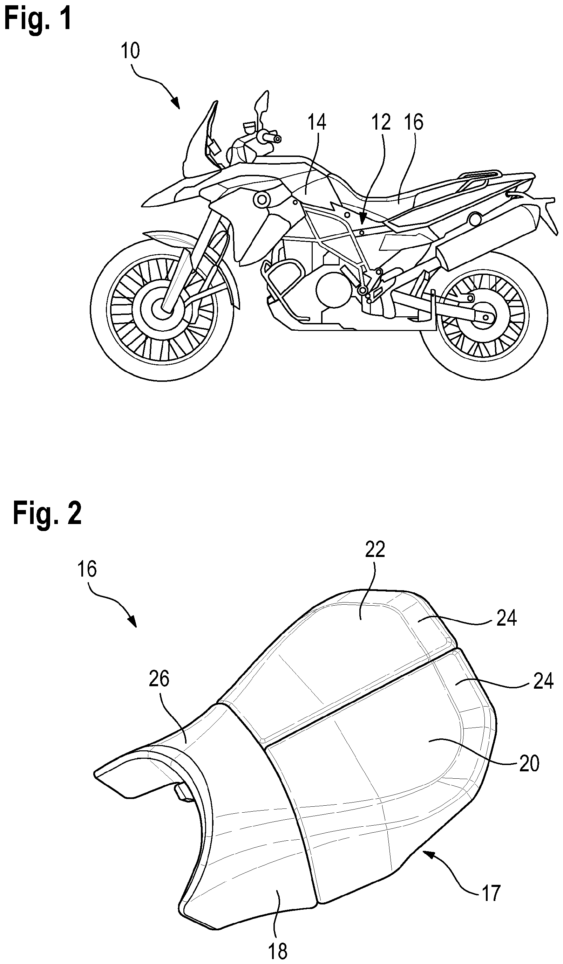

In Figur 1 ist ein Kraftrad 10 gezeigt, das als Motorrad ausgebildet ist. Das Kraftrad hat eine Karosserie 12, einen Tank 14 sowie eine verstellbare Sitzbaugruppe 16, die in Bezug auf eine Längsrichtung des Kraftrads 10 hinter dem Tank 14 am Kraftrad 10 angebracht ist.

Alternativ dazu kann der Tank 14 jedoch auch an einer anderen Stelle des Kraftrads 10 vorgesehen sein, beispielsweise im Bereich des Hecks des Kraftrads 10 oder unterhalb der Sitzbaugruppe 16.

Figur 2 zeigt die Sitzbaugruppe 16 in einer Schrägansicht. Die Sitzbaugruppe 16 umfasst eine Sitzwanne 17 mit einem Basisabschnitt 18, einem ersten Schwenkabschnitt 20 und einem zweiten Schwenkabschnitt 22.

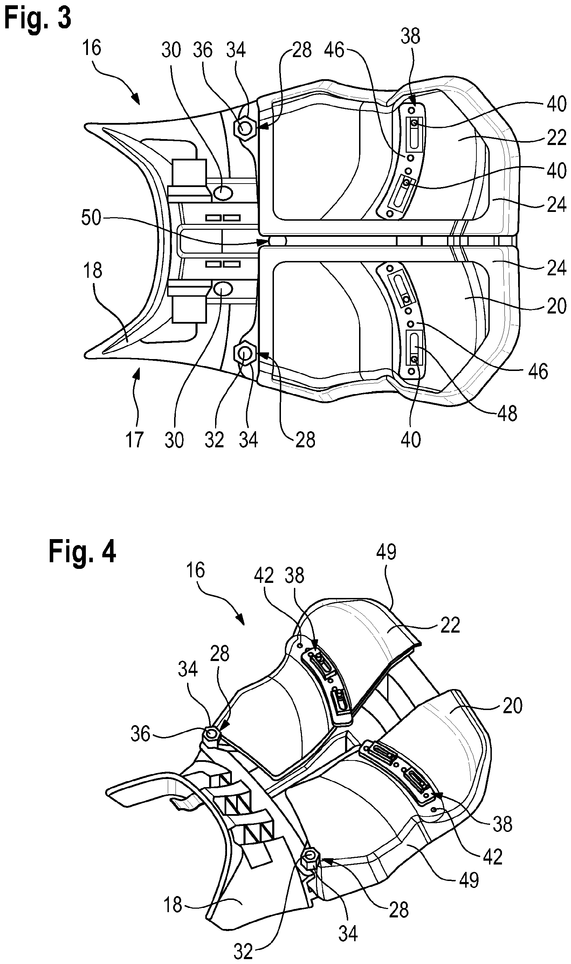

Ferner umfasst die Sitzbaugruppe 16 ein Sitzpolster 24, das mit einem Sitzpolsterbezug 26 bezogen ist. Das Sitzpolster 24 bildet eine Sitzfläche für einen Fahrer des Kraftrads 10 und gegebenenfalls für einen Beifahrer. Das Sitzpolster 24 ist aus Illustrationsgründen in Figuren 2 und 3 nicht vollständig dargestellt, sondern nur angedeutet. In den Figuren 4 bis 6 ist das Sitzpolster 24 hingegen aus Illustrationsgründen gar nicht dargestellt. Das Sitzpolster 24 erstreckt sich jedoch über den gesamten Bereich der Sitzwanne 17, also über den Basisabschnitt 18 und die Schwenkabschnitte 20, 22.

Außerdem weist die Sitzbaugruppe 16 eine Verstelleinrichtung 28 auf, deren Funktionsweise im Folgenden näher erläutert wird.

Wie in Figur 3 gezeigt ist, weist der Basisabschnitt 18 wenigstens einen Befestigungsabschnitt 30 auf, mittels dem der Basisabschnitt 18 fest mit der Karosserie 12 und/oder mit einem Rahmenteil des Kraftrads 10 verbunden ist. Insbesondere ist der Basisabschnitt 18 mittels geeigneter Befestigungsmittel an der Karosserie 12 befestigt, beispielsweise festgeschraubt.

Die Verbindung zwischen dem Basisabschnitt 18 und dem Kraftrad 10 ist zerstörungsfrei lösbar. Der Basisabschnitt 18 kann dann also ohne den Basisabschnitt 18 oder das Kraftrad 10 zu beschädigen vom Kraftrad 10 abgenommen werden.

Der erste Schwenkabschnitt 20 und der zweite Schwenkabschnitt 22 sind, in Längsrichtung des Kraftrads 10 gesehen, nebeneinander auf dem Basisabschnitt 18 angeordnet. Genauer gesagt sind die beiden Schwenkabschnitte 20, 22 jeweils mittels der Verstelleinrichtung 28 gegenüber dem Basisabschnitt 18 verschwenkbar mit dem Basisabschnitt 18 verbunden.

Zu diesem Zweck weist die Verstelleinrichtung 28 eine erste Schwenkachse 32 auf, die an einem vorderen, seitlich äußeren Ende des ersten Schwenkabschnitts 20 am Basisabschnitt 18 angebracht ist und die sich im Wesentlichen vertikal erstreckt. Der erste Schwenkabschnitt 20 weist an seinem vorderen, seitlich äußeren Ende ein Verbindungselement 34 auf, das mit der ersten Schwenkachse 32 verbunden ist, wobei der erste Schwenkabschnitt 20 und die erste Schwenkachse 32 relativ zueinander verdrehbar sind. Über das Verbindungselement 34 und die erste Schwenkachse 32 ist der erste Schwenkabschnitt 20 also mit dem Basisabschnitt 18 gegenüber dem Basisabschnitt 18 verschwenkbar verbunden.

Insbesondere weist das Verbindungselement eine Durchgangsöffnung auf, wobei sich die erste Schwenkachse 32 zumindest teilweise in die Durchgangsöffnung hinein erstreckt, beispielsweise komplett durch die Durchgangsöffnung hindurch.

Analog dazu weist die Verstelleinrichtung 28 eine zweite Schwenkachse 36 auf, die an einem vorderen, seitlich äußeren Ende des zweiten Schwenkabschnitts 22 am Basisabschnitt 18 angebracht ist und die sich im Wesentlichen vertikal erstreckt. Der zweite Schwenkabschnitt 22 weist an seinem vorderen, seitlich äußeren Ende ebenfalls ein Verbindungselement 34 auf, das mit der zweiten Schwenkachse 36 verbunden ist, wobei der zweite Schwenkabschnitt 22 und die zweite Schwenkachse 36 relativ zueinander verdrehbar sind. Über das Verbindungselement 34 und die zweite Schwenkachse 36 ist der zweite Schwenkabschnitt 22 also mit dem Basisabschnitt 18 gegenüber dem Basisabschnitt 18 verschwenkbar verbunden.

Insbesondere weist das Verbindungselement 34 eine Durchgangsöffnung auf, wobei sich die zweite Schwenkachse 36 zumindest teilweise in die Durchgangsöffnung hinein erstreckt, beispielsweise komplett durch die Durchgangsöffnung hindurch.

Mittels der Verstelleinrichtung 28 sind die beiden Schwenkabschnitte 20, 22 also gegenüber dem Basisabschnitt 18 verschwenkbar am Basisabschnitt 18 angebracht, wobei die Schwenkbewegung der Schwenkabschnitte 20, 22 seitlich nach außen und/oder nach innen erfolgt, also voneinander weg oder aufeinander zu.

Um eine Schwenkbewegung der beiden Schwenkabschnitte 20, 22 freizugeben und/oder zu sperren weist die Verstelleinrichtung 28 eine Feststelleinrichtung 38 mit Befestigungsmitteln 40 auf.

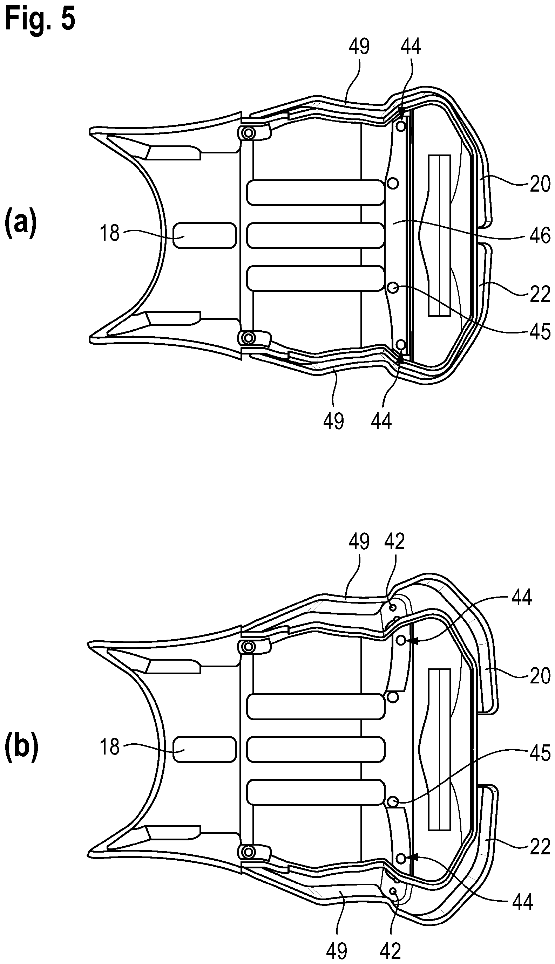

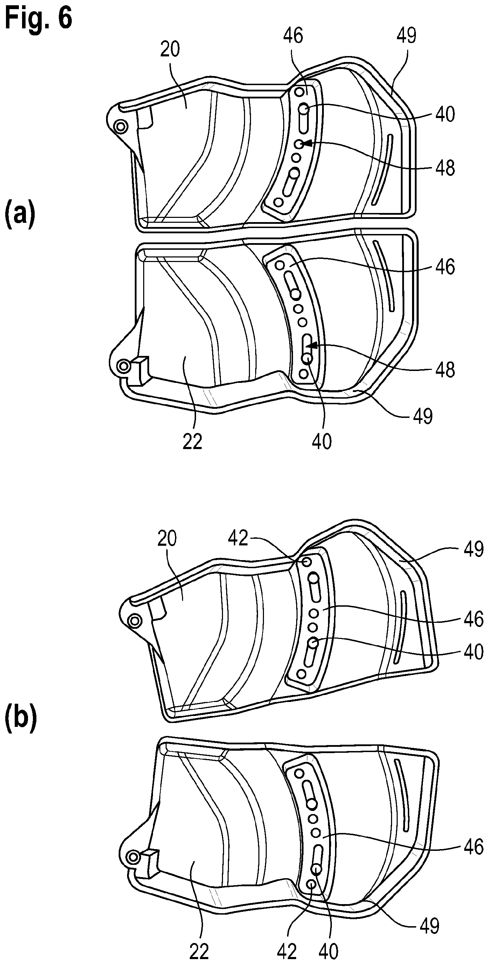

Wie besonders gut in den Figuren 4 und 6 zu erkennen ist, weisen die beiden Schwenkabschnitte 20, 22 jeweils mehrere Durchgangsöffnungen 42 auf, die entlang eines Kreisabschnitts um die jeweilige Schwenkachse 32 bzw. 36 angeordnet sind. Ferner weist, wie in Figur 5 angedeutet, der Basisabschnitt 18 mehrere Aufnahmen 44 auf.

Im in den Figuren 3 bis 6 gezeigten Ausführungsbeispiel sind jeweils zwei Befestigungsmittels 40 für den ersten Schwenkabschnitt 20 und für den zweiten Schwenkabschnitt 22 vorgesehen. Es kann jedoch auch eine beliebige andere Zahl an Befestigungsmitteln 40 vorgesehen sein.

Die Befestigungsmittel 40 erstrecken sich durch jeweils eine der Durchgangsöffnungen 42 hindurch in eine der Aufnahmen 44. Vorzugsweise sind dabei die Durchgangsöffnungen 42 und die Aufnahmen 44 in Bezug auf ihre radiale Richtung jeweils im Wesentlichen komplementär zu den Befestigungsmitteln 40 ausgebildet, sodass die Schwenkbewegungen des ersten Schwenkabschnitts 20 und des zweiten Schwenkabschnitts 22 durch Formschluss verhindert sind.

Die Befestigungsmittel 40 können als Schrauben ausgebildet sein, vorzugsweise wobei die Aufnahmen 44 ein zum Gewinde der Schrauben passendes Innengewinde aufweisen, sodass die Schwenkabschnitte 20, 22 durch die Durchgangsöffnungen 42 hindurch am Basisabschnitt 18 festgeschraubt werden können.

Wie in Figur 5 gezeigt ist, können die Aufnahmen 44 alternativ auch als Durchgangsöffnungen ausgebildet sein, wobei die als Schrauben ausgebildeten Befestigungsmittel 40 mittels Muttern 45, die an der Unterseite des Basisabschnitts 18 vorgesehen sind, befestigt werden.

Optional kann an jedem der Schwenkabschnitte 20, 22 wenigstens ein Verstärkungselement 46 vorgesehen sein, das unmittelbar an einer Oberseite und/oder an einer Unterseite des entsprechenden Schwenkabschnitts 20, 22 angeordnet ist. Das wenigstens eine Verstärkungselement 46 weist mehrere Durchgangsöffnungen 48 auf, wobei sich die Befestigungsmittel 40 der Feststelleinrichtung 38 durch jeweils eine der Durchgangsöffnungen 48 hindurch erstrecken.

Das wenigstens eine Verstärkungselement 46 bildet eine Unterlegscheibe für die Befestigungsmittel 40, um die von den Befestigungsmitteln 40 auf die Schwenkabschnitte 20, 22 ausgeübte Kraft auf eine größere Fläche zu verteilen. Das wenigstens eine Verstärkungselement besteht vorzugsweise aus Metall.

Alternativ oder zusätzlich kann auch ein Verstärkungselement 46 an der Unterseite des Basisabschnitts 18 vorgesehen sein.

Durch die oben beschriebene Verstelleinrichtung 28 sind die Schwenkabschnitte 20, 22 stufenweise in mehreren Stellungen, die voneinander verschiedene Schwenkwinkel gegenüber dem Basisabschnitt 18 aufweisen, mittels der Befestigungsmittel 40 mit dem Basisabschnitt 18 verbindbar. Dementsprechend ist die Breite der Sitzbaugruppe 16 in mehreren Stufen verstellbar.

Die Feststelleinrichtung 38, insbesondere die Lage der einzelnen Durchgangsöffnungen 42 in den Schwenkabschnitten 20, 22, legt dabei einen minimalen und/oder einen maximalen Winkel der Schwenkbewegung fest. Die Sitzbaugruppe 16 weist beim minimalen Winkel der Schwenkbewegung eine minimale Breite und beim maximalen Winkel der Schwenkbewegung eine maximale Breite auf.

Optional weisen die Schwenkabschnitte 20, 22 jeweils einen seitlichen Wandabschnitt 49 auf, der sich, in Längsrichtung der Sitzbaugruppe 16 gesehen, von einer Oberseite des Basisabschnitts 18 ausgehend seitlich am Basisabschnitt 18 vorbei erstreckt. Eine Kontur der Wandabschnitte 49 ist dabei zu einer Kontur des Basisabschnitts 18 zumindest abschnittsweise im mathematischen Sinne ähnlich.

Die Wandabschnitte 49 liegen in der unverschwenkten Stellung der Schwenkabschnitte 20, 22 wenigstens abschnittsweise außenseitig am Basisabschnitt 18 anliegen, insbesondere entlang der gesamten Kontur der Wandabschnitte 49. Die Wandabschnitte 49 bilden daher einen Anschlag, der die minimale Auslenkung der Schwenkabschnitte 20, 22 bezüglich der Schwenkbewegung festlegt.

Die minimale Auslenkung der Schwenkabschnitte 20, 22 ist in den Figuren 2, 3, 5a und 6a gezeigt. Die beiden Schwenkabschnitte 20, 22 sind nicht gegeneinander verschwenkt und verlaufen daher im Wesentlichen parallel zueinander in Längsrichtung des Kraftrads 10.

Demgegenüber zeigen die Figuren 4, 5b und 6b jeweils eine verschwenkte Stellung der beiden Schwenkabschnitte 20, 22, in der die beiden Schwenkabschnitte 20, 22 jeweils nach außen verschwenkt sind, wodurch die Breite der Sitzbaugruppe und damit die Sitzfläche für den Fahrer und gegebenenfalls für den Beifahrer verbreitert ist.

Eine möglicher Ablauf der Breitenverstellung der Sitzbaugruppe 16 ist in der oben beschriebenen Ausgestaltung der Sitzbaugruppe 16 durch die folgenden Schritte gegeben:
Zunächst wird das Sitzpolster 24 und/oder der Basisabschnitt 18 abgenommen. Nun werden die Befestigungsmittel 40 gelöst, sodass die Schwenkbewegung der beiden Schwenkabschnitte 20, 22 freigegeben wird.

Danach werden die beiden Schwenkabschnitte 20, 22 in die gewünschte Position verschwenkt und die Befestigungsmittel 40 wieder angezogen, sodass die Schwenkbewegung der beiden Schwenkabschnitte 20, 22 wieder gesperrt wird. Anschließend wird das Sitzpolster 24 und/oder der Basisabschnitt 18 wieder befestigt.

Damit sich das Material des Sitzpolsters 24 bei der oben beschriebenen Breitenverstellung der Sitzbaugruppe 16 nicht zu sehr dehnen muss, ist im Bereich der Schwenkabschnitte 20, 22 ein Längsschlitz 50 im Sitzpolster 24 vorgesehen. Vorzugsweise verläuft der Längsschlitz 50 in Längsrichtung des Kraftrads 10 über die gesamte Länge der beiden Schwenkabschnitte 20, 22.

Alternativ zur oben beschriebenen Ausgestaltung der Schwenkabschnitte 20, 22 können die Durchgangsöffnungen 42 auch als Langlöcher ausgebildet sein. Die Langlöcher erstrecken sich dann jeweils im Wesentlichen entlang eines Kreisabschnitts um die entsprechende Schwenkachse 32, 36.

Die Befestigungsmittel 40 erstrecken sich auch in dieser Ausgestaltung der Sitzbaugruppe 16 durch die Langlöcher hindurch in die jeweilige Aufnahme 44 im Basisabschnitt 18.

Vorzugsweise weisen die Befestigungsmittel 40 dabei eine erste und eine zweite Stellung auf, wobei der jeweilige Schwenkabschnitt 20, 22 in der ersten Stellung der Befestigungsmittel 40 bezüglich der Schwenkbewegung kraftschlüssig mit dem Basisabschnitt 18 verbunden ist, und wobei der jeweilige Schwenkabschnitt 20, 22 in der zweiten Stellung der Befestigungsmittel 40 gegenüber dem Basisabschnitt 18 verschwenkbar ist. Dementsprechend ist die Breite der Sitzbaugruppe in dieser Ausgestaltung der Sitzbaugruppe 16 stufenlos verstellbar.

In den bisher beschriebenen Ausführungsformen der Sitzbaugruppe 16 wird die Breite der Sitzbaugruppe 16 durch manuelles Abnehmen des Sitzpolsters 24 und/oder des Basisabschnitts 18 und anschließendes manuelles Lösen der Befestigungsmittel 40 verstellt.

Die Verstelleinrichtung 28 kann jedoch in beliebiger geeigneter Weise elektrisch und/oder mechanisch betätigbar sein. Dementsprechend umfasst die Verstelleinrichtung 28 dann einen Elektromotor und/oder einen mechanischen Mechanismus, mittels dem die beiden Schwenkabschnitte 20, 22 verschwenkbar sind. Die Breitenverstellung der Sitzbaugruppe 16 kann zumindest teilweise automatisch und/oder manuell erfolgen.

Beispielsweise weist die Verstelleinrichtung ein mit dem Elektromotor und/oder dem mechanischen Mechanismus verbundenes Schneckengetriebe auf, mittels dem die beiden Schwenkabschnitte 20, 22 verstellt werden können.

Beispielsweise ist die Verstelleinrichtung 28 dabei betätigbar, ohne dass Teile wie das Sitzpolster 24 und/oder der Basisabschnitt 18 abgenommen werden müssen. Zu diesem Zweck kann die Verstelleinrichtung 28 ein von außerhalb des Kraftrads 10 zugängliches Betätigungselement aufweisen, wie zum Beispiel ein Stellrad zur Betätigung des mechanischen Mechanismus und/oder einen Betätigungsschalter für den Elektromotor.

Weist die Verstelleinrichtung 28 einen Elektromotor auf, so kann die Breitenverstellung der Sitzbaugruppe 16 auch während der Fahrt erfolgen.

## Patentansprüche

1. Verstellbare Sitzbaugruppe (16) für ein Kraftrad (10), mit einer Sitzwanne (17) und einer Verstelleinrichtung (28), wobei die Sitzwanne (17) einen Basisabschnitt (18) sowie zwei schwenkbar mit dem Basisabschnitt (18) verbundene Schwenkabschnitte (20, 22) umfasst, die in Längsrichtung der Sitzbaugruppe (16) gesehen nebeneinander auf dem Basisabschnitt (18) angeordnet sind, wobei der Basisabschnitt (18) einen Befestigungsabschnitt (30) zur Befestigung der Sitzbaugruppe (16) am Kraftrad (10) aufweist, und wobei die Verstelleinrichtung (28) dazu ausgebildet ist, die beiden Schwenkabschnitte (20, 22) jeweils gegenüber dem Basisabschnitt (18) zu verschwenken
**dadurch gekennzeichnet, dass** die Schwenkabschnitte (20, 22) jeweils, in Längsrichtung der Sitzbaugruppe (16) gesehen, an ihrem vorderen, seitlich äußeren Ende mittels einer Schwenkachse (32, 36) mit dem Basisabschnitt (18) verbunden sind, sodass die Schwenkbewegung der beiden Schwenkabschnitte (20, 22), in Längsrichtung der Sitzbaugruppe (16) gesehen, seitlich nach außen voneinander weg oder aufeinander zu erfolgt, wobei die Schwenkbewegung der beiden Schwenkabschnitte (20, 22) eine reine Breitenverstellung der Sitzbaugruppe bewirkt.

2. Sitzbaugruppe (16) nach Anspruch 1, **dadurch gekennzeichnet, dass** die Verstelleinrichtung (28) eine Feststelleinrichtung (38) umfasst, die dazu ausgebildet ist, eine Schwenkbewegung der beiden Schwenkabschnitte (20, 22) freizugeben und/oder zu sperren, insbesondere wobei die Feststelleinrichtung (38) einen minimalen und/oder einen maximalen Winkel der Schwenkbewegung festlegt.

3. Sitzbaugruppe (16) nach Anspruch 2, **dadurch gekennzeichnet, dass** der Basisabschnitt (18) wenigstens zwei Aufnahmen (44) aufweist und die Schwenkabschnitte (20, 22) jeweils wenigstens eine Durchgangsöffnung (42) aufweisen, wobei sich Befestigungsmittel (40) der Feststelleinrichtung (38) durch die wenigstens eine Durchgangsöffnung (42) jedes Schwenkabschnitts (20, 22) hindurch in jeweils eine der Aufnahmen (44) erstrecken.

4. Sitzbaugruppe (16) nach Anspruch 3, **dadurch gekennzeichnet, dass** die Durchgangsöffnungen (42) jeweils als Langloch ausgebildet sind, wobei sich die Langlöcher in den Schwenkabschnitten (20, 22) jeweils im Wesentlichen entlang eines Kreisabschnitts um ein Zentrum der Schwenkbewegung erstrecken.

5. Sitzbaugruppe (16) nach einem der vorhergehenden Ansprüche, **dadurch gekennzeichnet, dass** die Verstelleinrichtung (28) elektrisch und/oder mechanisch betätigbar ist.

6. Sitzbaugruppe (16) nach einem der vorhergehenden Ansprüche, **dadurch gekennzeichnet, dass** die Schwenkabschnitte (20, 22) jeweils einen seitlichen Wandabschnitt (49) aufweisen, der sich, in Längsrichtung der Sitzbaugruppe (16) gesehen, von einer Oberseite des Basisabschnitts (18) ausgehend seitlich am Basisabschnitt (18) vorbei erstreckt, insbesondere wobei eine Kontur der Wandabschnitte (49) zu einer Kontur des Basisabschnitts (18) zumindest abschnittsweise ähnlich ist.

7. Sitzbaugruppe (16) nach einem der vorhergehenden Ansprüche, **dadurch gekennzeichnet, dass** die Sitzbaugruppe (16) ein Sitzpolster (24) aufweist, das sich im Wesentlichen über den gesamten Basisabschnitt (18) erstreckt und mit den Schwenkabschnitten (20, 22) und/oder dem Basisabschnitt (18) verbunden ist.

8. Sitzbaugruppe (16) nach Anspruch 7, **dadurch gekennzeichnet, dass** das Sitzpolster (24) im Bereich der beiden Schwenkabschnitte (20, 22) einen Längsschlitz (50) aufweist.

9. Sitzbaugruppe (16) nach Anspruch 7 oder 8, **dadurch gekennzeichnet, dass** das Sitzpolster (24) und/oder der Basisabschnitt (18) abnehmbar sind beziehungsweise ist.

10. Kraftrad (10) mit einer Sitzbaugruppe (16) nach einem der vorhergehenden Ansprüche, wobei der Basisabschnitt (18) fest mit dem Kraftrad (10) verbunden ist.

## Claims

1. Adjustable seat assembly (16) for a motorcycle (10), with a seat pan (17) and an adjusting device (28), the seat pan (17) comprising a base portion (18) and two pivoting portions (20, 22) which are connected pivotably to the base portion (18) and are arranged on the base portion (18) next to one another as viewed in the longitudinal direction of the seat assembly (16), the base portion (18) having a fastening portion (30) for fastening the seat assembly (16) to the motorcycle (10), and the adjusting device (28) being configured to pivot the two pivoting portions (20, 22) in each case with respect to the base portion (18),
**characterized in that** the pivoting portions (20, 22) are in each case connected to the base portion (18) at the front, laterally outer end, as viewed in the longitudinal direction of the seat assembly (16), by means of a pivot axle (32, 36), with the result that the pivoting movement of the two pivoting portions (20, 22) takes place laterally to the outside away from one another or towards one another, as viewed in the longitudinal direction of the seat assembly (16), the pivoting movement of the two pivoting portions (20, 22) bringing about a pure width adjustment of the seat assembly.

2. Seat assembly (16) according to Claim 1, **characterized in that** the adjusting device (28) comprises a fixing device (38) which is configured to release and/order to block a pivoting movement of the two pivoting portions (20, 22), the fixing device (38) fixing, in particular, a minimum and/or a maximum angle of the pivoting movement.

3. Seat assembly (16) according to Claim 2, **characterized in that** the base portion (18) has at least two receptacles (44), and the pivoting portions (20, 22) each have at least one through opening (42), fastening means (40) of the fixing device (38) extending through the at least one passage opening (42) of each pivoting portion (20, 22) into an each case one of the receptacles (44) .

4. Seat assembly (16) according to Claim 3, **characterized in that** the through openings (42) are each configured as a slot, the slots extending in the pivoting portions (20, 22) in each case substantially along a circular portion about a centre of the pivoting movement.

5. Seat assembly (16) according to one of the preceding claims, **characterized in that** the adjusting device (28) can be actuated electrically and/or mechanically.

6. Seat assembly (16) according to one of the preceding claims, **characterized in that** the pivoting portions (20, 22) each have a lateral wall portion (49) which extends, as viewed in the longitudinal direction of the seat assembly (16), starting from an upper side of the base portion (18) laterally past the base portion (18), a contour of the wall portions (49) being similar at least in portions, in particular, to a contour of the base portion (18).

7. Seat assembly (16) according to one of the preceding claims, **characterized in that** the seat assembly (16) has a seat cushion (24) which extend substantially over the entire base portion (18) and is connected to the pivoting portions (20, 22) and/or the base portion (18).

8. Seat assembly (16) according to Claim 7, **characterized in that** the seat cushion (24) has a longitudinal slot (50) in the region of the two pivoting portions (20, 22).

9. Seat assembly (16) according to Claim 7 or 8, **characterized in that** the seat cushion (24) and/or the base portion (18) are/is removable.

10. Motorcycle (10) with a seat assembly (16) according to one of the preceding claims, the base portion (18) being connected fixedly to the motorcycle (10).

## Revendications

1. Ensemble de siège réglable (16) pour une motocyclette (10), avec une cuvette de siège (17) et un dispositif de réglage (28), la cuvette de siège (17) comprenant une section de base (18) et deux sections pivotantes (20, 22) reliées de manière pivotante à la section de base (18), qui sont agencées côte à côte sur la section de base (18), vues dans la direction longitudinale de l'ensemble de siège (16), la section de base (18) présentant une section de fixation (30) pour la fixation de l'ensemble de siège (16) sur la motocyclette (10), et le dispositif de réglage (28) étant configuré pour faire pivoter les deux sections pivotantes (20, 22) respectivement par rapport à la section de base (18),
**caractérisé en ce que** les sections pivotantes (20, 22) sont chacune reliées à la section de base (18) au niveau de leur extrémité avant latéralement extérieure, vues dans la direction longitudinale de l'ensemble de siège (16), au moyen d'un axe de pivotement (32, 36), de telle sorte que le mouvement de pivotement des deux sections pivotantes (20, 22), vues dans la direction longitudinale de l'ensemble de siège (16), s'effectue latéralement vers l'extérieur en s'éloignant ou en se rapprochant l'une de l'autre, le mouvement de pivotement des deux sections pivotantes (20, 22) effectuant uniquement un réglage de la largeur de l'ensemble de siège.

2. Ensemble de siège (16) selon la revendication 1, **caractérisé en ce que** le dispositif de réglage (28) comprend un dispositif d'immobilisation (38) qui est configuré pour libérer et/ou bloquer un mouvement de pivotement des deux sections pivotantes (20, 22), le dispositif d'immobilisation (38) établissant notamment un angle minimal et/ou maximal du mouvement de pivotement.

3. Ensemble de siège (16) selon la revendication 2, **caractérisé en ce que** la section de base (18) présente au moins deux logements (44) et les sections pivotantes (20, 22) présentent chacune au moins une ouverture traversante (42), des moyens de fixation (40) du dispositif d'immobilisation (38) s'étendant à travers l'au moins une ouverture traversante (42) de chaque section pivotante (20, 22) dans l'un respectif des logements (44).

4. Ensemble de siège (16) selon la revendication 3, **caractérisé en ce que** les ouvertures traversantes (42) sont chacune réalisées sous forme de trou oblong, les trous oblongs dans les sections pivotantes (20, 22) s'étendant chacun essentiellement le long d'une section circulaire autour d'un centre du mouvement de pivotement.

5. Ensemble de siège (16) selon l'une quelconque des revendications précédentes, **caractérisé en ce que** le dispositif de réglage (28) peut être actionné électriquement et/ou mécaniquement.

6. Ensemble de siège (16) selon l'une quelconque des revendications précédentes, **caractérisé en ce que** les sections pivotantes (20, 22) présentent chacune une section de paroi latérale (49) qui, vue dans la direction longitudinale de l'ensemble de siège (16), s'étend à partir d'un côté supérieur de la section de base (18), latéralement au-delà de la section de base (18), un contour des sections de paroi (49) étant notamment similaire à un contour de la section de base (18) au moins par sections.

7. Ensemble de siège (16) selon l'une quelconque des revendications précédentes, **caractérisé en ce que** l'ensemble de siège (16) présente un coussin de siège (24) qui s'étend essentiellement sur toute la section de base (18) et qui est relié aux sections pivotantes (20, 22) et/ou à la section de base (18).

8. Ensemble de siège (16) selon la revendication 7, **caractérisé en ce que** le coussin de siège (24) présente une fente longitudinale (50) dans la zone des deux sections pivotantes (20, 22).

9. Ensemble de siège (16) selon la revendication 7 ou 8, **caractérisé en ce que** le coussin de siège (24) et/ou la section de base (18) sont amovibles.

10. Motocyclette (10) avec un ensemble de siège (16) selon l'une quelconque des revendications précédentes, la section de base (18) étant reliée de manière fixe à la motocyclette (10).
